# EUROPEAN PATENT SPECIFICATION

(11) **EP 1 531 088 B1**
(45) Date of publication and mention of the grant of the patent: **20.09.2006**
(21) Application number: 04027201.5
(22) Date of filing: 16.11.2004
(51) Int. Cl.: B60R 11/02

(54) **Case for carrying and mounting an image system in a car**
Trage-und Montage-Koffer für eine Anzeigevorrichtung in einem Kraftfahrzeug
Mallette de transport et de montage d'un système de visualisation dans un véhicule

(30) Priority: 17.11.2003 KR 2003081146; 04.06.2004 KR 2004040782
(43) Date of publication of application: 18.05.2005
(73) Proprietor: Daewoo Electronics Corporation, Seoul (KR)
(72) Inventor: Lee, Jung-Hoon, c/o Daewoo Electr. Corp., Seoul (KR); Cho, Hyun Ki, c/o Daewoo Electro. Corp., Seoul (KR)
(74) Representative: Turi, Michael

(56) References cited:
- DE-A- 3 904 107
- DE-U- 9 105 125
- US-A- 6 092 705
- US-A1- 2003 038 149

## Description

The present invention relates to a case for carrying and mounting an image system in a car; and, more particularly, to a case for carrying and mounting an image system in a car, which is capable of accommodating an image reproducing device and a display device therein while allowing them to be carried safely and conveniently, and capable of being detachably mounted to a seat in a car while allowing an easy mode change thereof to a user.

Such a case is disclosed in U.S. Patent No 2003/0038149A entitled "Laptop transport and support system for mobile environments" and considered as the best prior art for the present application.

With a recent trend for installing a display device, i.e., a monitor, in a car to allow a passenger to watch TV or video and enjoy a game in the car, various AV systems equipped with display devices are mounted in the car.

Such AV systems are implemented by appropriately combining a liquid crystal display of a touch screen type, a video system, an audio system, a CD (compact disk) changer, a navigation system, a DVD (digital versatile disk) player, a satellite broadcasting set-top box, and the like, and are endowed with diversified and improved functions to support Internet, wireless telecommunications, voice recognition and character-voice conversion, etc., in addition to a function to do navigation.

In general, most of the AV systems for a car are installed in the car by an 'on-dash' type or an 'in-dash' type mounting scheme. With regard to the on-dash type scheme, an AV system is secured/coupled on a dashboard of a car. In the in-dash type scheme, on the other hand, the AV system is installed inside the dashboard and a monitor is projected upward when a power button is pressed.

However, since such mounting methods for the car AV system are more complicated than those for the installation of general household AV systems, general users other than experts have many difficulties in installing the car AV systems, and have to get it done by, for example, an AV system service agent. Furthermore, such mounting methods are disadvantageous in that they cannot satisfy the increasing demand to install a large-size liquid crystal display not smaller than 7-inch in the car.

Accordingly, systems for carrying and detachably mounting the AV systems in the car have been utilized, and one example of such systems is disclosed in U.S. Patent No. 6,092,705, entitled "SELF-CONTAINED CASE FOR HOUSING TRANSPORTING AND MOUNTING VIDEO MONITOR AND VIDEO PLAYER FOR USE IN PASSENGER VEHICLES", which was filed on January 25, 1999.

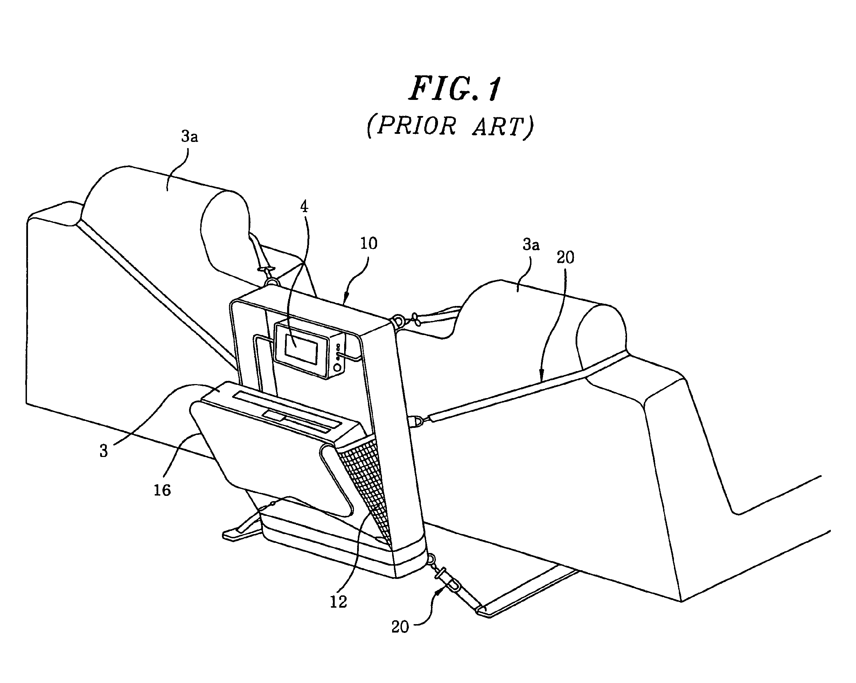

Fig. 1 is a perspective view of a conventional mounting system that is secured inside the car, disclosed in U.S. Patent No. 6,092,705. The mounting system allows entertainment video accessories to be detachably and securely mounted inside the car. The mounting system includes a rectangular case 10 elongated in a vertical direction, for housing video accessories; and quick connect members 20 for detachably securing the case 10 to a seat of the car.

A front panel 16 and mesh side panels 12 connected to each other are attached to the case 10 to open or close an upper and a lower portion of the case 10. The mesh side panels 12 can be moved outwardly at a predetermined angle in order to allow the passenger to access the video accessories easily. An image reproducing device 3 is mounted in a lower inner portion of the case 10, and a display device 4 is mounted to an upper inner portion of the case 10 via a mounting unit (not shown) and receives signals from the image reproducing device 3. By folding the front panel 16, the upper portion of the case 10 is opened and the display device 4 is exposed.

The quick connect members 20 are detachably connected and fastened at positions close to all of the internal floor, a first and a second headrest 3a of the car.

However, carrying the case 10 is not convenient because of its long length and there is likelihood that the video accessories accommodated in the case 10 are damaged by collision of the case 10 against a projection portion of the road while it is being carried. Moreover, it is rather troublesome and time-consuming to open the front panel 16 that covers the upper and the lower portion of the case 10.

It is, therefore, an object of the present invention to provide a case for carrying and mounting an image system in a car, which can be carried safely and conveniently, and whose mode can be changed to an operational mode easily.

In accordance with a preferred embodiment of the present invention, there is provided a case for carrying and mounting an image system in a car, the case including: a first case member for accommodating an image reproducing device therein, the first case member having an opening formed at a top portion thereof; a second case member for accommodating a display device therein, an edge of which is rotatably connected to the top portion of the first case member, so that the second case member selectively opens or closes the opening; a fastening device for selectively fastening the second case member to the top portion of the first case member; and one or more mounting straps for detachably mounting the first case member to a seat in the car, said one or more mounting straps being connected to the first case member.

In accordance with another preferred embodiment of the present invention, there is provided a case for carrying and mounting an image system in a car, the case including: a first case member for accommodating an image reproducing device therein, the first case member having an opening formed at a top portion thereof; a cap for selectively closing or opening the opening, an edge of which is rotatably connected to the top portion of the first case member; a second case member for accommodating a display device therein, the second case member being detachably mounted to a front surface of the first case member; and one or more mounting straps for detachably mounting the first case member to a seat in the car, said one or more straps being connected to the first case member.

The above and other objects and features of the present invention will become more apparent from the following description of preferred embodiments given in conjunction with the accompanying drawings, in which:
Fig. 1 illustrates a perspective view of a conventional mounting system, when it is mounted to seats in a car;
Fig. 2 illustrates a front perspective view of a case for carrying and mounting an image system in a car in accordance with the first preferred embodiment of the present invention;
Fig. 3 illustrates a front perspective view of the case for carrying and mounting an image system in a car in accordance with the first preferred embodiment of the present invention, when the case is in an operational mode;
Fig. 4 is a perspective view of a mounting unit in accordance with the first preferred embodiment of the present invention;
Fig. 5 illustrates a perspective view of the case for carrying and mounting an image system in a car in accordance with the first preferred embodiment of the present invention, when the case is detachably mounted to the seat in the car;
Fig. 6 is a front perspective view of a case for carrying and mounting an image system in a car in accordance with a second preferred embodiment of the present invention, when the case is in the operational mode;
Fig. 7 illustrates a front perspective view of the case for carrying and mounting an image system in a car in accordance with the second preferred embodiment of the present invention, when a subsidiary case is removed from a main case;
Fig. 8 is a rear perspective view of the case for carrying and mounting an image system in a car in accordance with the second preferred embodiment of the present invention, when mounting straps are removed from the main case;
Fig. 9 is a rear view of the subsidiary case of the case for carrying and mounting an image system in a car in accordance with the second preferred embodiment of the present invention;
Fig. 10 illustrates a perspective view of the case for carrying and mounting an image system in a car in accordance with the second preferred embodiment of the present invention, when the main case is detachably mounted to the seat in the car; and
Fig. 11 illustrates a perspective view of the subsidiary case of the case for carrying and mounting an image system in a car in accordance with the second preferred embodiment of the present invention, when the subsidiary case is mounted to a headrest of the seat in the car.

Preferred embodiments of the present invention will now be described in detail with reference to the accompanying drawings.

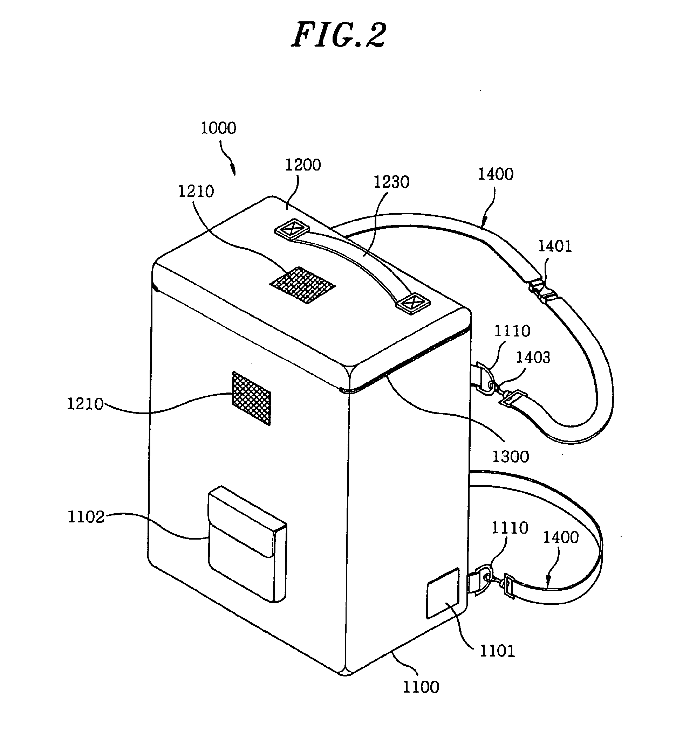

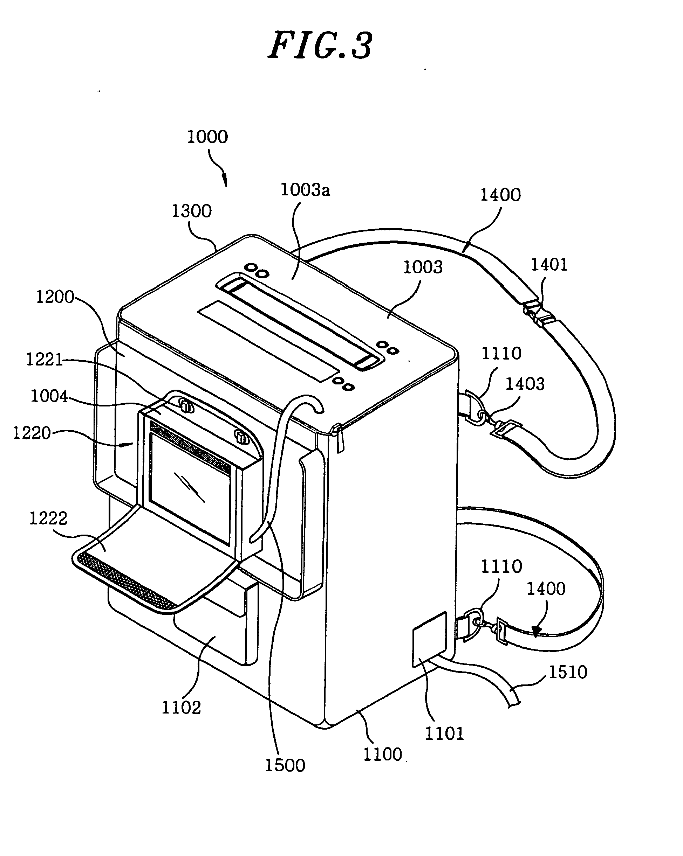

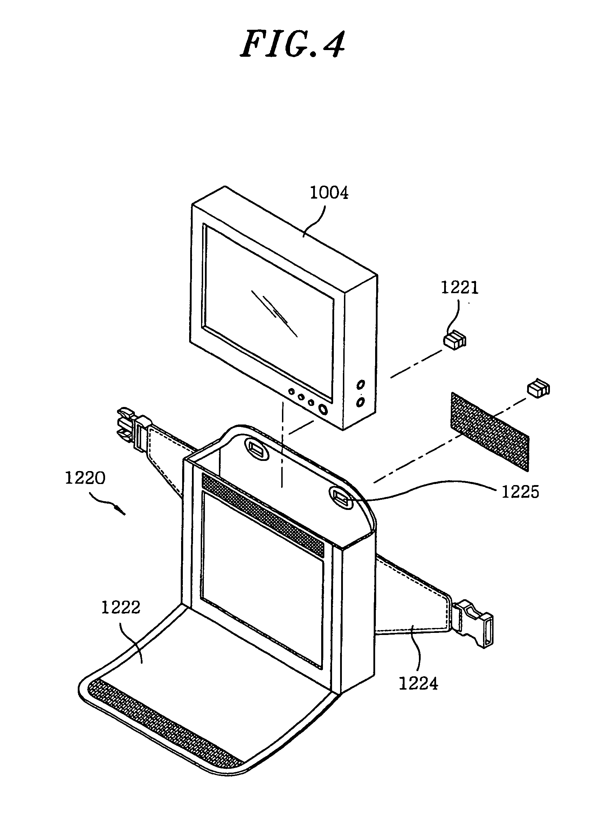

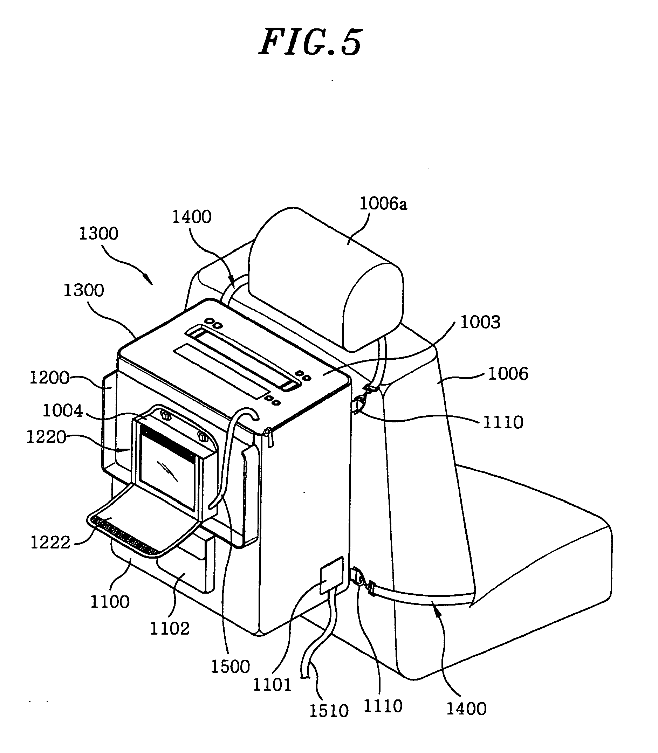

Fig. 2 is a front perspective view of a case for carrying and mounting an image system in a car in accordance with a first preferred embodiment of the present invention, Fig. 3 is a front perspective view of the case for carrying and mounting an image system in a car in accordance with the first preferred embodiment of the present invention, when the case is in an operational mode, Fig. 4 is a perspective view of a mounting unit for enveloping a display device therein, and Fig. 5 is a perspective view of the case for carrying and mounting an image system in a car in accordance with the first preferred embodiment of the present invention, when the case is detachably mounted to a seat in the car.

As shown in Figs. 2 and 3, the case 1000 for carrying and mounting an image system in a car in accordance with the first preferred embodiment of the present invention includes a main case 1100 for accommodating an image reproducing device 1003 therein, a cover case 1200 for accommodating a display device 1004 therein, an edge of which is rotatably connected to a top portion of the main case 1100, a fastening device 1300 for selectively fastening the cover case 1200 to the top portion of the main case 1100 and a plurality of mounting straps 1400 for detachably mounting the main case 1100 to the seat in the car.

At the top portion of the main case 1100, an opening is formed (or a top side of the main case 1100 is removed), through which the image reproducing device 1003 is vertically inserted into the main case 1100. The image reproducing device 1003 is disposed upright in the main case 1100 while exposing its front control panel 1003a through the opening of the main case 1100. The image reproducing device 1003 is usually constituted by a video cassette player(VCP), a digital versatile disk (DVD) player, or a combination thereof.

Further, in order to prevent the image reproducing device 1003 from being removed unintentionally from the main case 1100, the image reproducing device 1003 may be held in the main case 1100, using an elastic loop (not shown) provided in the main case 1100.

The cover case 1200 is rotatably connected to a front edge of the upper portion of the main case 1100, thus selectively opening or closing the opening formed at the top portion of the main case 1100. The cover case 1200 can be fastened to the main case 1100 by means of the fastening device 1300 constituted by, for example, a zipper, while covering the opening formed at the top portion of the main case 1100.

On an inner surface of the cover case 1200, a mounting unit 1220 for enveloping the display device 1004 is detachably mounted, wherein the display device 1004 constituted by, for example, an LCD television, produces videos and audios using signals transmitted from the image reproducing device 1003 through a cable 1500. As shown in Fig. 4, in an upper portion of a rear wall of the mounting unit 1220, a pair of locking holes 1225 are formed, into which locking buttons 1221 fixed on the inner surface of the cover case 1200 are fitted, so that the mounting unit 1220 enveloping the display device 1004 is detachably mounted on the inner surface of the cover case 1200. Further, the mounting unit 1220 is provided with a front flap 1222 rotatably attached to a lower end of the mounting unit 1220 and a fastening strap 1224 fixed to the rear wall of the mounting unit 1220 to allow the mounting unit 1220 to be independently and detachably secured to a headrest 1006a of the seat in the car.

The display device 1004 may be constituted by a device to produce videos and audios using signals received through an antenna (not shown) from a broadcasting station or a satellite instead of the image reproducing device 1003.

Further, as shown in Fig. 2, fastening tapes 1210, such as a hook and loop fastener, are attached to an outer surface of the cover case 1200 and the front surface of the main case 1100, respectively. Thus, when the cover case 1200 opens the opening of the main case 1100 completely, that is, the cover case 1200 is rotated from the top portion of the main case 1100 at about 270°, the cover case 1200 is detachably attached to the front surface of the main case 1100 via the fastening tapes 1210. Further, on the outer surface of the cover case 1200, a carrying handle 1230 is provided to allow a user to conveniently carry the case 1000 for carrying and mounting an image system in a car.

On four corner portions of a rear surface of the main case 1100, a plurality of rings 1110 are attached, to which the mounting straps 1400 are connected. Although the number of mounting straps 1400 is not limited to a specific number, it is preferable that a pair of mounting straps 1400 be used as shown in Fig. 5. Each of the mounting straps 1400 is provided with the snap hooks 1403 at its opposite ends, so that it can be releasably connected to the main case 1100 by connecting the snap hooks 1403 to the rings 1110 attached on the rear surface of the main case 1100. One of the mounting straps 1400 is connected to the pair of rings 1110 attached on the upper portion of the rear surface of the main case 1100, thus being wrapped around the headrest 1006a of the seat in the car. The other mounting strap 1400 is connected to the pair of rings 1110 attached on the lower portion of the rear surface of the main case 1100, thus being wrapped around a lower portion of a backrest 1006 of the seat in the car. Therefore, the case 1000 for carrying and mounting an image system in a car is detachably mounted to the backside of the seat in the car by the pair of mounting straps 1400.

Further, each of the mounting straps 1400 is provided with a buckle 1401 at a central portion thereof, so that it can be divided into two parts by disconnecting the buckle 1401. In addition, the length of the mounting strap 1400 may be adjusted by a length adjusting device (not shown).

Further, a pocket 1102 is provided on the front surface of the main case 1100 to contain DVDs and the like. A closure flap 1101 is provided on a side wall of the main case 1100 to selectively cover a cable opening (not shown) which is formed in the side wall of the main case 1100 such that a power supply cable 1510 of the image reproducing device 1003 accommodated in the main case 1100 extends out of the main case 1100 as shown in Fig. 3. The power supply cable 1510 can be electrically connected to a cigarette lighter jack (not shown) installed in the car to supply electricity to the image reproducing device 1003.

Hereinafter, the operation of the case 1000 for carrying and mounting an image system in a car having such a configuration as described above will be described.

First, the fastening device 1300 is opened to unfasten the cover case 1200 from the main case 1100 and the cover case 1200 is rotated at about 270° from the top portion of the main case 1100, so that the cover case 1200 opens the opening formed at the top portion of the main case 1100, and is attached to the front surface of the main case 1100 via means of the fastening tapes 1210. Then, the mounting unit 1220 enveloping the display device 1004 is mounted to the inner surface of the cover case 1200 by fitting the locking buttons 1221 fixed on the inner surface of the cover case 1200 into the locking holes 1225 formed in the rear wall of the mounting unit 1220. Next, the front flap 1222 is opened to uncover a screen of the display device 1004.

The image reproducing device 1003 is inserted into the main case 1100 such that the control panel 1003a is exposed to the outside through the opening formed at the top portion of the main case 1100. Further, the display device 1004 and the image reproducing device 1003 are coupled to each other via the cable 1500 for conveying signals therebetween and supplying power to the display device 1004.

One mounting strap 1400 is releasably secured to the headrest 1006a by connecting the snap hooks 1403 of the mounting strap 1400 to the corresponding rings 1110 provided on the upper portion of the rear surface of the main case 1100. Further, the other mounting strap 1400 is releasably secured to the lower portion of the backrest 1006 by connecting the snap hooks 1403 of the other mounting strap 1400 to the corresponding rings 1110 provided on the lower portion of the rear surface of the main case 1100.

Through the aforementioned steps, the case 1000 for carrying and mounting an image system in a car is detachably mounted to the backside of the seat in the car. Next, electricity is supplied from, for example, the cigarette lighter jack (not shown), through the power supply cable 1510 extending through the cable opening formed in the side wall of the main case 1100, to the image reproducing device 1003 within the main case 1100.

Thereafter, the image reproducing device 1003 is controlled to load and reproduce a video cassette tape or a DVD, so that signals are transmitted from the image reproducing device 1003 to the display device 1004 through the cable 1500, thus producing videos and audios.

Alternatively, the mounting unit 1220 may be mounted to the headrest 1006a, using the fastening strap 1224 fixed to the mounting unit 1220, after the mounting unit 1220 has been detached from the cover case 1200.

Meanwhile, when a user desires to store or carry the case 1000 for carrying and mounting an image system in a car after removing the case from the seat in the car, first, the front flap 1222 of the mounting unit 1220 is closed. Subsequently, the cover case 1200 is detached from the front surface of the main case 1100 by disconnection the fastening tapes 1210, and is then rotated to cover the opening formed at the top portion of the main case 1100. Next, the fastening device 1300 is closed to fasten the cover case 1200 to the main case 1100.

Thereafter, the snap hooks 1403 of the mounting straps 1400 are disconnected from the rings 1110 attached to the main case 1100, so that the case 1000 for carrying and mounting an image system in a car is released from the seat in the car.

After being released from the main case 1100, the mounting straps 1400 may be stored in the main case 1100 or the pocket 1102 provided on the front surface of the main case 1100.

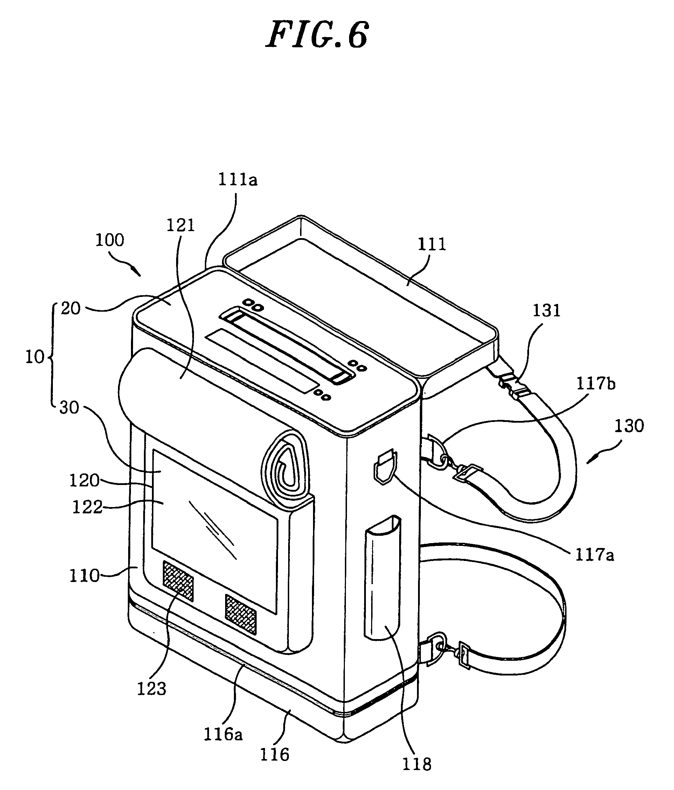

Hereinafter, a case for carrying and mounting an image system in a car in accordance with a second preferred embodiment of the present invention will be described with reference to Figs. 6 to 11.

The image system 10 includes an image reproducing device 20 and a display device 30. The image reproducing device 20 reproduces video or audio signals stored in a storage medium, such as a disc or a magnetic tape, thus generating image signals corresponding to the reproduced video and audio signals. The display device 30 receives the image signals from the image reproducing device 20 through one or more cables (not shown) for conveying signals therebetween to produces videos and audios corresponding to the image signals.

The image reproducing device 20 is generally constituted by a DVD player, etc, and the display device 30 is generally constituted by an LCD television that is thin and light. However, the image reproducing device 20 and the display device 30 are not limited to the DVD player and the LCD television, respectively. Further, the display device 30 may be constituted by a device to display images using radio frequency (RF) signals received from a broadcasting station or a satellite.

The image reproducing device 20 is provided with a power supply cable (not shown) for receiving power, which is constituted by a type of power cord or a type of one for being electrically connected to a cigarette lighter jack installed in a car. Further, a control panel is provided on the image reproducing device 20, so that the image reproducing device 20 is operated in response to a control signal which is input through the control panel by a user.

Meanwhile, the case 100 for carrying and mounting an image system in a car in accordance with the second preferred embodiment of the present invention includes a main case 110 for accommodating the image reproducing device 20 therein, a subsidiary case 120 for accommodating the display device 30, which is detachably mounted to a front surface of the main case 110 and mounting straps 130 for detachably mounting the main case 110 to the seat in the car.

The main case 110 has a space therein to accommodate the image reproducing device 20 and an opening formed at a top portion thereof. A cap 111 is rotatably coupled to a rear edge of the top portion of the main case 110 to selectively open or close the opening formed at the top portion of the main case 110. The cap 111 is fastened to the upper portion of the main case 110 by means of a fastening device 111a, such as a zipper.

The image reproducing device 20 is inserted into the main case 110 through the opening formed at the top portion of the main case 110 such that the control panel is exposed to the outside through the opening. Thus, the manipulation of keys on the control panel and the loading or unloading of a disc or a video cassette tape can be performed readily. Further, the closure of the cover 111 prevents the image reproducing device 20 from being removed unintentionally from the main case 110.

The subsidiary case 120 is detachably mounted to the front surface of the main case 110, and defines a storage space therein to accommodate the display device 30. The subsidiary case 120 is provided with a transparent part 122, made of a transparent material, in its front wall to allow a user to watch therethrough a screen of the display device 30 accommodated in the subsidiary case 120. Further, a part of the front wall of the subsidiary case 120 corresponding to the screen of the display device 30 may be an opening for exposing the screen of the display device 30.

Further, the subsidiary case 120 has an opening formed at a top portion thereof. Through the opening of the subsidiary case 120, the display device 130 is vertically inserted into the subsidiary case 120. The subsidiary case 120 is provided with a protective flap 121 which is attached to a top portion of a rear wall of the subsidiary case 120 to cover the opening formed at the top portion of the subsidiary case 120 and the transparent part 122 of the subsidiary case 120 corresponding to the screen of the display device 30, thus protecting the screen of the display device 30. Fastening tapes 123, such as a hook and loop fastener, is provided on an inner surface of a free end portion of the protective flap 121 and on the front surface of the subsidiary case 120, respectively, so that the protective flap 121 can be attached to the front surface of the subsidiary case 120.

When a user desires to carry or store the case 100 for carrying and mounting an image system in a car, the protective flap 121 is closed while covering the opening formed at top portion of the subsidiary case 120, and the transparent part 122 in the front wall of the subsidiary case 120, thus preventing the display device 30 from being removed unintentionally from the subsidiary case 120, and protecting the screen of the display device 30 against external impacts.

Further, the protective flap 121 is rolled up, and attached to a fastening tape 112, such as a hook and loop fastener, provided on an upper portion of the front surface of the main case 110, thus keeping the protective flap 121 open, therefore allowing a user to watch the screen.

While the protective flap 121 is opened to allow the user to watch the screen of the display device 30 within the subsidiary case 120, the display device 30 may be removed unintentionally from the subsidiary case 120 through the opening formed at the top portion of the subsidiary case 120. Thus, in order to prevent the unintentional removal of the display device 30 from the subsidiary case 120, a holder, such as a strap, may be provided to block a part of the opening formed at the top portion of the subsidiary case 120.

Hereinafter, a method of detachably mounting the subsidiary case 120 to the front surface of the main case 110 will be described.

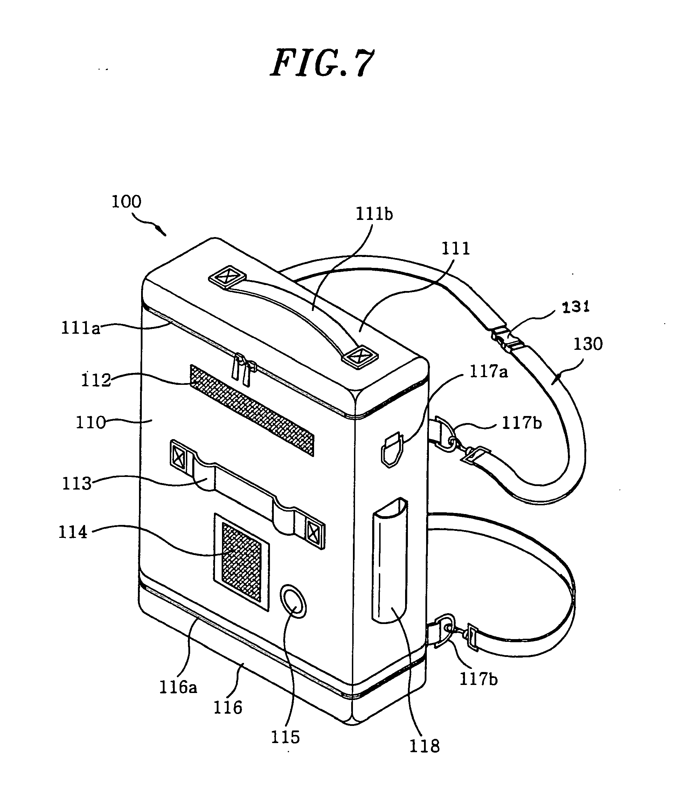

As shown in Fig. 7, a pair of clamp holders 113 and a fastening tape 114, such as a hook and loop fastener, are provided on the front surface of the main case 110 to detachably mount the subsidiary case 120 to the main case 110. The pair of clamp holders 113 are disposed at a lower position than the fastening tape 112 which functions to secure the protective cover 121 to the main case 110 when the protective flap 121 of the subsidiary case 120 is opened and rolled up, and the fastening tape 114 is disposed at a lower position than the clamp holders 113.

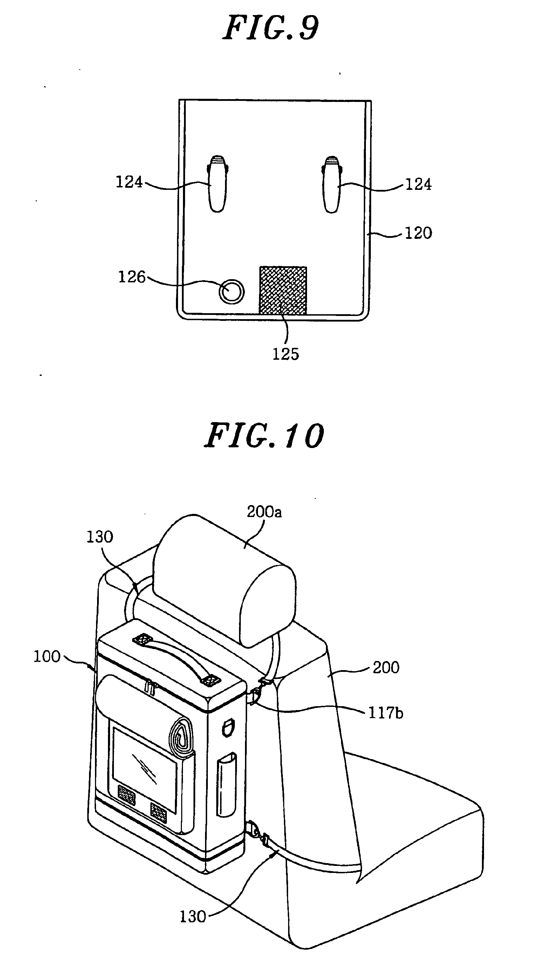

As shown in FIG. 9, a pair of clamps 124 and a fastening tape 125, such as a hook and loop fastener, for detachable connection between the main and subsidiary case 110, 120 are provided on a rear surface of the subsidiary case 120, wherein the fastening tape 125 is disposed at a lower position than the clamps 124.

In order to detachably mount the subsidiary case 120 to the main case 110, the clamps 124 of the subsidiary case 120 are removably inserted into the corresponding clamp holders 113 attached to the main case 110, and simultaneously the fastening tape 125 provided on the rear surface of the subsidiary case 120 is combined with the fastening tape 114 provided on the front surface of the main case 110.

The image reproducing device 20 and the display device 30 are connected to each other via several cables, including a cable for transmitting and receiving audio/video/control data and a power supply cable for supplying electricity from the image reproducing device 20 to the display device 30. Thus, as shown in Figs. 7 and 9, cable holes 115 and 126 are formed in a front wall of the main case 110 and the rear wall of the subsidiary case 120, respectively, so as to conveniently connect the cables between the image reproducing device 20 and the display device 30.

As shown in Fig. 7, a carrying handle 111b is provided on an outer surface of the cap 111, thus allowing a user to conveniently carry the case 100 for carrying and mounting an image system in a car. Further, a pair of first rings 117a are connected to an upper portion of side walls of the main case 110. A shoulder strap (not shown) can be connected to the first rings 117a allowing a user to conveniently move the case 100 for carrying and mounting an image system in a car to a desired place.

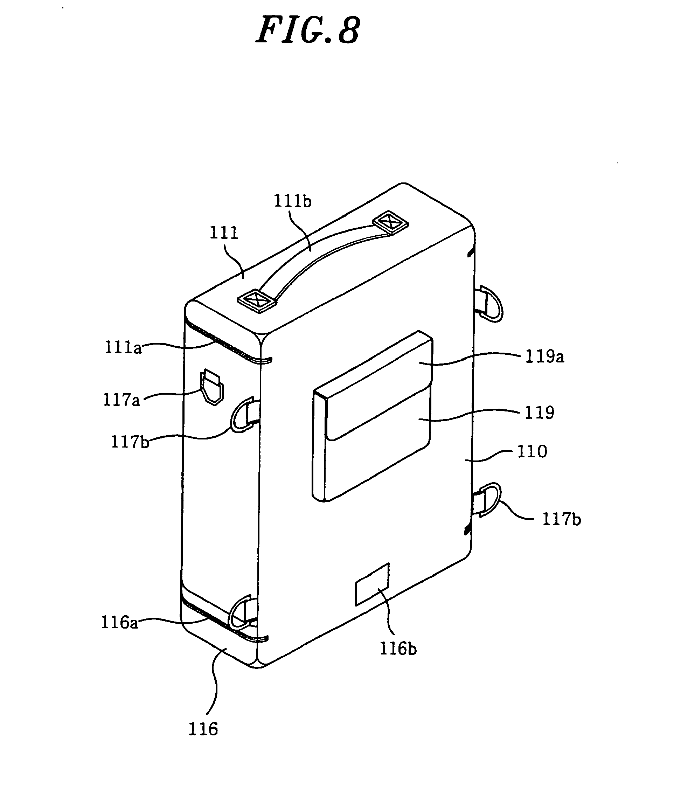

Further, as shown in Fig. 8, second rings 117b are attached to four corners of the rear surface of the main case 110. The mounting straps 130 are connected to the second rings 117b, thus allowing the case 100 for carrying and mounting an image system in a car to be detachably mounted to the backside of the seat in the car.

The shoulder strap is adjustable in length, with hooks provided on opposite ends of the shoulder strap for a quick connecting operation. The number of mounting straps 130 is one or more, with snap hooks provided at both opposite ends of each mounting strap 130 for a quick connecting operation. Alternatively, a snap hook may be provided at an end of each mounting strap 130, while a catch may be provided at the other end of the mounting strap 130. The snap hook is constructed not to be removed unintentionally from the associated second ring 117b, once the snap hook is connected to the second connection ring 117b. The catch is constructed to be hung on another object. Further, each of the mounting straps 130 is provided with a buckle 131 in its center portion.

Further, a cable case 116 is provided on a bottom of the main case 110 to provide a storage space for storing the cables used for the image reproducing device 20 and the display device 30. A partition plate (not shown) is provided between the storage space of the cable case 116 and the storage space of the main case 110 so as to separate the storage space of the cable case 116 from the storage space of the main case 110. Further, a communication hole (not shown) is formed in the partition plate to allow the storage space of the cable case 116 to communicate with the storage space of the main case 110. The cable case 116 is configured to be fastened or unfastened by a zipper 116a. Further, as shown in Fig. 8, a cable flap 116b for covering an cable outlet hole (not shown) formed in a rear wall of the cable case 116 is provided on the rear surface of the cable case 116, thus allowing a cable connected to the image reproducing device 20 within the main case 110 to be drawn out of the main case 110 through the communication hole and the cable outlet hole.

As shown in Fig. 7, a side pocket 118 is provided on the side wall of the main case 110 to contain desired items, such as a remote controller. The side pocket 118 has an opening at its top portion, and the remote controller or other items are put into the side pocket 118 through the opening.

Further, as shown in Fig. 8, a rear pocket 119 is provided on the rear surface of the main case 110 to provide a storage space. The rear pocket 119 has an opening at its top portion, and several accessories are put into the rear pocket 119 through the opening. The rear pocket 119 is provided with a pocket cover 119a to selectively open or close the opening formed at the top portion of the rear pocket 119.

Further, a voice output unit and an operation display unit may be provided on the image reproducing device 20 or the display device 30 of the image system 10. In such a case, through holes may be formed in each of the main case 110 and the subsidiary case 120 at positions corresponding to the voice output unit and the operation display unit.

Hereinafter, a method of installing the case for carrying and mounting an image system in a car will be described.

The case 100 for carrying and mounting an image system in a car can be mounted to the backside of the seat in the car by coupling the mounting straps 130 to the second connection rings 117b.

Fig. 10 shows an example of the installation of the case 100. The installation of the case 100 in Fig. 10 is performed by mounting the main case 110 to one seat. For the purpose of detachably mounting the main case 110 to the backside of the seat, the mounting strap 130 connected to the pair of second rings 117b attached to the upper portion on the rear surface of the main case 110 is wrapped around a headrest 200a of the seat in the car. Further, another mounting strap 130 connected to a pair of second connection rings 117b attached to the lower portion on the rear surface of the main case 110 is wrapped around a lower portion of the backrest 200 of the seat in the car.

Further, the main case 110 may be mounted between the two seats in the car.

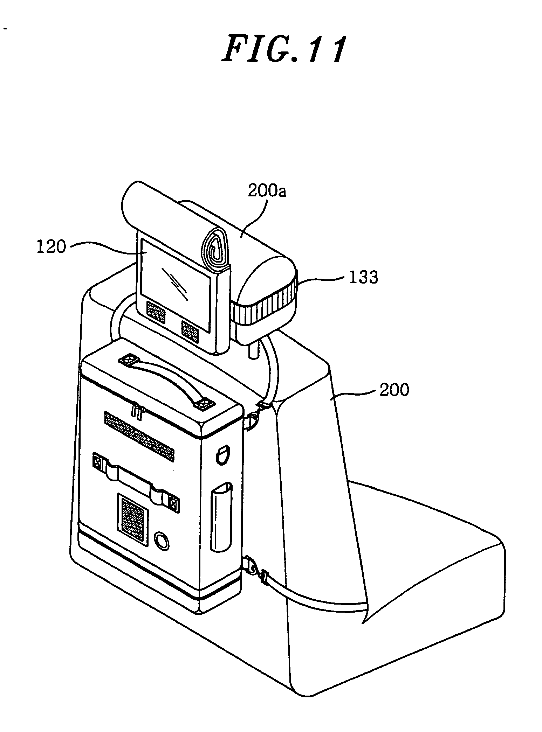

Furthermore, the case 110 for carrying and mounting an image system in a car in accordance with the second preferred embodiment of the present invention may be mounted on the seat in the car as shown in Fig. 11. That is, the subsidiary case 120 may be mounted on the backside of the seat in the car, after being separated from the main case 110. In this case, an additional elastic strap 133 is fastened around the headrest 200a or the backrest 200 of the seat in the car. Subsequently, the clamps 124 provided on the rear surface of the subsidiary case 120 are connected to the strap 133, thus mounting the subsidiary case 120 to the backside of the seat in the car.

While a user carries the case 100 for carrying and mounting an image system in a car, the user may hold the subsidiary case 120 enveloping the display device 30 with the user's hand to watch the display device 30 after separating the subsidiary case 120 from the main case 110.

Moreover, a user may install or dispose the case 100 in a desired place, such as at home or in the office, through various installation methods.

As described above, in the case for carrying and mounting an image system in a car in accordance with the preferred embodiments of the present invention, the display device is uncovered (i.e., the mode of the case is changed to an operational mode) by rolling up the protective flap of the subsidiary case or opening the fastening device and rotating the cover case. In addition, since the display device and the image reproducing device are accommodated in the case for carrying and mounting an image system in a car in accordance with the present invention in such a manner as not to increase the vertical length of the case for carrying and mounting an image system in a car. Accordingly, the case for carrying and mounting the image system in accordance with the preferred embodiments of the present invention can be conveniently and safely carried and allows a user to change the mode thereof to the operational mode easily.

While the invention has been shown and described with respect to the preferred embodiments, it will be understood by those skilled in the art that various changes and modifications may be made without departing from the scope of the invention as defined in the following claims.

## Claims

1. A case for carrying and mounting an image system in a car, the case comprising:
a first case member for accommodating an image reproducing device therein, the first case member having an opening formed at a top portion thereof;
a second case member for accommodating a display device therein, an edge of which is rotatably connected to the top portion of the first case member, so that the second case member selectively opens or closes the opening;
a fastening device for selectively fastening the second case member to the top portion of the first case member; and
one or more mounting straps for detachably mounting the first case member to a seat in the car, said one or more mounting straps being connected to the first case member.

2. The case of claim 1, further comprising:
a locking button fixed on an inner surface of the second case member; and
a mounting unit for detachably mounting the display device on the inner surface of the second case member, the mounting unit including:
a container for enveloping the display device, the container having a locking hole formed at a top portion of a rear wall thereof; and
a front flap for covering a screen of the display device enveloped in the container, the front flap being attached to a lower part of the container,
wherein the mounting unit is detachably mounted to the inner surface of the second case member by connecting the locking button to the locking hole.

3. The case of claim 1, wherein when the second case member is rotated from the top portion of the first case member at about 270°, the second case member is disposed in front of the first case member and the display device accommodated in the second case member is exposed to an outside of the second case member.

4. The case of claim 1, wherein the first case member is provided with a first fastening tape on a front surface thereof and the second case member is provided with a second fastening tape on an outer surface thereof, so that, when the second case member is rotated from the top portion of the first case member at about 270° , the first fastening tape and the second fastening tape are combined to detachably fasten the second case member to the first case member.

5. A case for carrying and mounting an image system in a car, the case comprising:
a first case member for accommodating an image reproducing device therein, the first case member having an opening formed at a top portion thereof;
a cap for selectively closing or opening the opening, an edge of which is rotatably connected to the top portion of the first case member;
a second case member for accommodating a display device therein, the second case member being detachably mounted to a front surface of the first case member; and
one or more mounting straps for detachably mounting the first case member to a seat in the car, said one or more straps being connected to the first case member.

6. The case of claim 5, further comprising a third case member for providing a storage space, the third case member being disposed on a bottom of the first case member.

7. The case of claim 5, wherein the second case member has a clamp fixed on a rear wall thereof and the first case member has a clamp holder provided on the front surface thereof, and the second case member is detachably mounted to the front surface of the first case member by connecting the clamp to the clamp holder.

8. The case of claim 7, wherein the second case member includes:
a transparent part for exposing a screen of the display device, the transparent part being formed in a front wall of the second case member; and
a protective flap for selectively covering the transparent part, the protective flap being attached to the rear wall of the second case member.

## Patentansprüche

1. Koffer zum Tragen und Montieren eines Bildgebungssystems in einem Kraftfahrzeug, wobei der Koffer umfaßt:
einen ersten Kofferteil, um darin eine Bildwiedergabevorrichtung aufzunehmen, wobei der erste Kofferteil eine Öffnung hat, die an seinem oberen Abschnitt ausgebildet ist;
einen zweiten Kofferteil, um eine Anzeigevorrichtung darin aufzunehmen, deren eine Kante drehbar mit dem oberen Abschnitt des ersten Kofferteils verbunden ist, so daß der zweite Kofferteil wahlweise die Öffnung öffnet oder schließt;
eine Befestigungsvorrichtung zum wahlweisen Befestigen des zweiten Kofferteils an dem oberen Abschnitt des ersten Kofferteils; und
ein oder mehrere Befestigungsbänder zum lösbaren Montieren des ersten Kofferteils an einem Sitz in dem Kraftfahrzeug, wobei das eine oder die mehreren Befestigungsbänder mit dem ersten Kofferteil verbunden sind.

2. Koffer nach Anspruch 1, des weiteren umfassend:
einen Verschlußknopf, der an einer inneren Oberfläche des zweiten Kofferteils befestigt ist; und
eine Montageeinheit zum lösbaren Montieren der Anzeigevorrichtung an der inneren Oberfläche des zweiten Kofferteils, wobei die Montageeinheit aufweist:
einen Behälter zum Umgeben der Anzeigevorrichtung, wobei der Behälter ein Verschlußloch hat, das an einem oberen Abschnitt seiner Rückwand ausgebildet ist; und
eine vordere Klappe zum Abdecken eines Schirms der in dem Behälter umgebenen Anzeigevorrichtung, wobei die vordere Klappe an einem unteren Teil des Behälters angebracht ist, wobei die Montageeinheit lösbar an der inneren Oberfläche des zweiten Kofferteils montiert ist durch Verbinden des Verschlußknopfes mit dem Verschlußloch.

3. Koffer nach Anspruch 1, bei welchem, wenn der zweite Kofferteil gegenüber dem oberen Abschnitt des ersten Kofferteils um etwa 270° gedreht ist, der zweite Kofferteil vor dem ersten Kofferteil angeordnet ist und die in dem zweiten Kofferteil aufgenommene Anzeigevorrichtung nach außerhalb des zweiten Kofferteils freigelegt ist.

4. Koffer nach Anspruch 1, bei welchem der erste Kofferteil mit einem ersten Befestigungsband an seiner vorderen Oberfläche versehen ist und der zweite Kofferteil mit einem zweiten Befestigungsstreifen an seiner äußeren Oberfläche versehen ist, derart, daß wenn der zweite Kofferteil gegenüber dem oberen Abschnitt des ersten Kofferteils um etwa 270° gedreht ist, das erste Befestigungsband und das zweite Befestigungsband kombiniert sind, um lösbar den zweiten Kofferteil an dem ersten Kofferteil zu befestigen.

5. Koffer zum Tragen und Montieren eines Bildgebungssystems in einem Kraftfahrzeug, wobei der Koffer umfaßt:
einen ersten Kofferteil, um darin eine Bildwiedergabevorrichtung aufzunehmen, wobei der erste Kofferteil eine an seinem oberen Abschnitt ausgebildete Öffnung hat;
einen Deckel zum wahlweisen Schließen oder Öffnen der Öffnung, wobei ein Rand von ihm drehbar mit dem oberen Abschnitt des ersten Kofferteils verbunden ist;
einen zweiten Kofferteil, um darin eine Anzeigevorrichtung aufzunehmen, wobei der zweite Kofferteil lösbar an einer vorderen Oberfläche des ersten Kofferteils montiert ist; und
ein oder mehrere Befestigungsbänder zum lösbaren Montieren des ersten Kofferteils an einem Sitz in dem Kraftfahrzeug, wobei das eine oder die mehreren Bänder mit dem ersten Kofferteil verbunden sind.

6. Koffer nach Anspruch 5, des weiteren umfassend einen dritten Kofferteil, um einen Lagerraum vorzusehen, wobei der dritte Kofferteil an einem Boden des ersten Kofferteils angeordnet ist.

7. Koffer nach Anspruch 5, bei welchem der zweite Kofferteil eine Klemme hat, die an seiner Rückwand befestigt ist und der erste Kofferteil einen Klemmenhalter hat, der an seiner vorderen Oberfläche vorgesehen ist und der zweite Kofferteil lösbar an der vorderen Oberfläche des ersten Kofferteils befestigt ist durch Verbinden der Klemme mit dem Klemmenhalter.

8. Koffer nach Anspruch 7, bei welchem der zweite Kofferteil aufweist:
einen transparenten Teil zum Freilegen eines Schirms der Anzeigevorrichtung, wobei der transparente Teil in einer Vorderwand des zweiten Kofferteils ausgebildet ist; und
eine Schutzklappe zum wahlweisen Abdecken des transparenten Teils, wobei die Schutzklappe an der Rückwand des zweiten Kofferteils angebracht ist.

## Revendications

1. Une mallette de transport et de montage d'un système de visualisation dans un véhicule, la mallette comprenant :
un premier élément de mallette, pour loger en son sein un dispositif de reproduction d'image, le premier élément de mallette comprenant une ouverture formée à une partie supérieure de celui-ci ;
un deuxième élément de mallette, pour recevoir en son sein un dispositif d'affichage, dont un bord est relié à rotation à la partie supérieure du premier élément de mallette, de manière que le deuxième élément de mallette ouvre ou ferme sélectivement l'ouverture ;
un dispositif de fixation, pour sélectivement fixer le deuxième élément de mallette à la partie supérieure du premier élément de mallette ; et
une ou plusieurs sangles de montage, pour monter de façon détachable le premier élément de mallette sur un siège dans le véhicule, lesdites une ou plusieurs sangles de montage étant relié(es) au premier élément de mallette.

2. La mallette selon la revendication 1, comprenant en outre :
un bouton de verrouillage fixé sur une surface intérieure du deuxième élément de mallette ; et
une unité de montage pour monter de façon détachable le dispositif d'affichage sur la surface intérieure du deuxième élément de mallette, l'unité de montage comprenant :
un boîtier, pour envelopper le dispositif d'affichage, le boîtier ayant un trou de verrouillage formé à une partie supérieure de la paroi arrière de celui-ci ; et
un volet avant, pour couvrir un écran du dispositif d'affichage enveloppé dans le boîtier, le volet avant étant fixé à une partie inférieure du boîtier,
dans laquelle l'unité de montage est montée de façon détachable sur la surface intérieure du deuxième élément de mallette, par liaison du bouton de verrouillage au trou de verrouillage.

3. La mallette selon la revendication 1, dans laquelle, lorsque le deuxième élément de mallette est tourné vis-à-vis de la partie supérieure du premier élément de mallette, d'un angle d'environ 270°, le deuxième élément de mallette est disposé à l'avant du premier élément de mallette, et le dispositif d'affichage logé dans le deuxième élément de mallette est exposé à l'extérieur du deuxième élément de mallette.

4. La mallette selon la revendication 1, dans laquelle le premier élément de mallette est muni d'une première bande de fixation sur une surface avant de celui-ci, et le deuxième élément de mallette est muni d'une deuxième bande de fixation sur une surface extérieure de celui-ci, de manière que, lorsque le deuxième élément de mallette est tourné par rapport à la partie supérieure du premier élément de mallette d'un angle d'environ 270°, la première bande de fixation et la deuxième bande de fixation soient combinées pour fixer de façon détachable le deuxième élément de mallette sur le premier élément de mallette.

5. Une mallette de transport et de montage d'un système de visualisation dans un véhicule, la mallette comprenant :
un premier élément de mallette devant loger en son sein un dispositif de reproduction d'image, le premier élément de mallette ayant une ouverture formée à une partie supérieure de celui-ci ;
un bouchon pour fermer ou ouvrir sélectivement l'ouverture, dont un bord est relié à rotation à la partie supérieure du premier élément de mallette ;
un deuxième élément de mallette, pour recevoir en son sein un dispositif d'affichage, le deuxième élément de mallette étant monté de façon détachable sur une surface avant du premier élément de mallette ; et
une ou plusieurs sangles de montage, pour monter de façon détachable le premier élément de mallette sur un siège dans le véhicule, lesdites une ou plusieurs sangles étant connecté(es) au premier élément de mallette.

6. La mallette selon la revendication 5, comprenant en outre un troisième élément de mallette pour fournir un espace de stockage, le troisième élément de mallette étant disposé sur une partie inférieure du premier élément de mallette.

7. La mallette selon la revendication 5, dans laquelle le deuxième élément de mallette comprend une attache fixée sur une paroi arrière de celui-ci, et le premier élément de mallette présente un support d'attache fixé sur la surface avant de celui-ci, et le deuxième élément de mallette est monté de façon détachable sur la surface avant du premier élément de mallette, par liaison de l'attache et du support d'attache.

8. La mallette selon la revendication 7, dans laquelle le deuxième élément de mallette comprend :
une partie transparente pour exposer un écran du dispositif d'affichage, la partie transparente étant formée dans une paroi avant du deuxième élément de mallette ; et
un volet de protection, pour sélectivement couvrir la partie transparente, le volet de protection étant fixé à la paroi arrière du deuxième élément de mallette.
